# EUROPEAN PATENT SPECIFICATION

(11) **EP 2 588 517 B1**
(45) Date of publication and mention of the grant of the patent: **02.09.2015**
(21) Application number: 10853889.3
(22) Date of filing: 30.06.2010
(51) Int. Cl.: C08J 9/28, C08L 75/04, C08K 7/26

(54) **INORGANIC NANOPOROUS PARTICLES WITH WATER DISPERSIBLE POLYURETHANE BINDER**
ANORGANISCHE NANOPORÖSE PARTIKEL MIT WASSERLÖSLICHEM POLYURETHANBINDER
PARTICULES NANOPOREUSES INORGANIQUES COMPRENANT UN LIANT POLYURÉTHANE DISPERSIBLE DANS L'EAU

(43) Date of publication of application: 08.05.2013
(73) Proprietor: Dow Global Technologies LLC, Midland, MI 48674 (US)
(72) Inventor: ZHANG, Yahong, Shanghai 201315 (CN); HUO, Yanli, Shanghai 200433 (CN); COSTEUX, Stéphane, Midland Michigan 48640 (US); KALANTAR, Thomas H, Midland Michigan 48642 (US)
(74) Representative: Hoggins, Mark Andrew
(86) International application number: PCT/CN2010/074811
(87) International publication number: WO 2012/000184

(56) References cited:
- US-A- 5 478 867
- US-A- 5 656 195
- US-A- 6 040 375
- US-A- 6 121 336
- US-A1- 2006 281 825
- JOCHEN FRICKE ET AL.: 'Aerogels' JOURNAL OF THE AMERICAN CERAMIC SOCIETY vol. 75, no. 8, August 1992, pages 2027 - 2035, XP055100859

## Description

### BACKGROUND OF THE INVENTION

### Field of the Invention

The present invention relates to an article of manufacture, a process for manufacturing the article of manufacture and a method for using the article. The article of manufacture comprises inorganic nanoporous particles bound together with a water dispersible polyurethane binder.

### Description of Related Art

Inorganic nanoporous materials such as aerogel materials offer tremendous thermal insulation properties. However, aerogel materials are not currently useful in building and construction applications due to cost and delicate mechanical properties. Preparing aerogel materials in a construction-sized solitary plank is currently not feasible, certainly not in the cost range of traditional insulating foam boards and planks. Part of the process for producing aerogels requires removing a large volume of solvent from the nanopore structure, typically by extraction with supercritical carbon dioxide in an autoclave or by other demanding drying methods. Such a process is formidable for a construction-sized solitary plank. Even so, aerogels tend to be friable and crumble to powder readily under abrasive force, which is common during handling on a construction site. Therefore, it is desirable to develop a plank of aerogel-like material that is less costly than casting a solitary aerogel plank and that is less friable than a solitary aerogel plank.

There have been numerous attempts at preparing aerogel containing insulating materials that are more amenable to construction applications than a solitary aerogel plank. For example, there are compositions that combine a polymeric foam matrix comprising an aerogel component. US 6,040,375 describes a composite foam comprising 10 to 90% by volume of SiO₂ aerogel and 90 to 10% by volume of a foamed polymer matrix. US2008/0287561 also describes polymeric foams containing aerogel particles dispersed in the polymer matrix. The aerogel particles require a coating to prevent polymer from penetrating pores of the aerogel material. US 6,136,216 describes a composition of aerogel and gelatin that is foamed. The composition is shapcable into various shapes. US 5,137,927 describes a polystyrene foam containing aerogel particles dispersed therein. WO2007/146945A2 describes flexible open cell foam/aerogel composites. In each of these references a foam binder contains aerogel particles.

Other technologies use a non-foamed binder to adhere aerogel particles together. US2010/0080949 describes using polymer/silica hybrid aerogel particles or beads covalently bonded with a binder to prepare aerogel composites. The aerogel particles of this invention are a hybrid of inorganic and organic materials. US 5,656,195 describes aerogel moldings that require 0.5 to 10 weight-percent sheet silicates and/or clay minerals based on aerogel weight to improve breaking strength. US2004/0077738 describes a layered insulation article that includes a component comprising aerogel, and aqueous binder and hollow non-porous particles presumably to reduce the density of the article.

Flexibility is desirable in an aerogel structure in addition to low density and thermal insulation properties, particularly for building and construction insulation applications where the insulating material may need to conform to various shapes in shipping, handling and application. The United States National Aeronautics and Space Administration has reported on recent developments on flexible crosslinked aerogel monolithic articles that comprise a polymerized and chemically bound coating over the aerogel structure (*see* publication LEW-18265-1 dated 04-06-09). Some degree of flexibility is also evident in articles of amine-modified aerogel monoliths crosslinked with di-isocyanate molecules (*see,* Capadona, et al., Polymer 47 (2006) 5754-5761). Both of these processes require casting a single aerogel monolithic crosslinked structure, a process that is a formidable task for construction-sized insulating articles.

A thermally insulating structure, particularly a flexible thermally insulating structure, comprising mostly inorganic nanoporous particles such as aerogel particles bonded together with a binder, but without a functional coating on the inorganic nanoporous particles is desirable. Still more desirable is such a structure that does not require a coating on the inorganic nanoporous particles, the presence of hollow non-porous particles or the presence of sheet silicates or clay minerals to achieve low density, flexibility and strength.

### BRIEF SUMMARY OF THE INVENTION

It is an object of an embodiment of the present invention to provide a low density thermal insulating material that is made primarily of inorganic nanoporous particles, but that can be flexible, and that does not require a functional coating on inorganic nanoporous particles, the presence of hollow non-porous particles or the presence of sheet silicates or clay minerals to achieve flexibility and strength. It is also an objective of an embodiment of the present invention to achieve the aforementioned objectives with a non-foamed binder.

Surprisingly, the present invention provides a solution to this objective by forming an article of inorganic nanoporous particles using a non-foamed water dispersible polyurethane as a binder for inorganic nanoporous particles.

The present invention, in its various aspects, is as set out in the accompanying claims.

In a first aspect, the present invention is an article comprising inorganic nanoporous particles bound together by a non-foamed water dispersible polyurethane, the article comprising 75 volume percent or more inorganic nanoporous particles based on total article volume and having a density of 0.14 grams per cubic centimeter or less and a thermal conductivity of 25 milliWatts per meter*Kelvin or less and having a thickness of at least 0.5 centimeters, wherein said inorganic nanoporous particles are functionally free of organic components having latent covalent bonding reactivity and functional coatings over the outside of the particles and the article is functionally free of hollow non-porous particles, sheet silicates and clay minerals.

Embodiments of the first aspect can include any one or combination of more than one of the following additional characteristics: having the inorganic nanoporous particles present at a concentration of 90 volume percent or more based on total article volume; having a thickness and sufficient flexibility to bend a plane perpendicular to the thickness at least 90 degrees around a mandrel having a diameter equal to the thickness of the article without macroscopic fracturing or crumbling; the water dispersible polyurethane being thermoplastic aliphatic polyurethane; the water dispersible polyurethane containing a form of dimethylolpropionic acid; the water dispersible polyurethane is crosslinked; the inorganic nanoporous particles include aerogel particles that contain silicon dioxide; the inorganic nanoporous particles have pore walls that are sufficiently hydrophobic so as to preclude water absorption throughout the porous structure of the particles; being in the form of a plank that is at least two centimeters thick, fifteen centimeters wide and fifteen centimeters long; and comprising a facer on at least one surface of the article.

In a second aspect, the present invention is process for preparing the article of the first aspect, the process comprising the following steps: (a) dispersing inorganic nanoporous particles into an aqueous dispersion of a non-foamed water dispersible polyurethane to form a filled dispersion; (b) casting the filled dispersion into a mold; and (c) drying to form an article of the first aspect, wherein said inorganic nanoporous particles are functionally free of organic components having latent covalent bonding reactivity and functional coatings over the outside of the particles.

Embodiments of the second aspect can further include any one or any combination of more than one of the following characteristics: the inorganic nanoporous particles are present in the filled dispersion at a concentration sufficient to result in 90 volume percent or more of the article volume of the final article volume; the water dispersible polyurethane is an aliphatic polyurethane; the water dispersible polyurethane contains a form of dimethylolpropionic acid; the water dispersible polyurethane after step (c) is crosslinked and the crosslinking is induced at any point or points prior to, during or after step (c); and the inorganic nanoporous particles have pore walls that are sufficiently hydrophobic so as to preclude water absorption throughout the porous structure of the particles.

In a third aspect, the present invention is a method for using the article of the first aspect, the method of use comprising placing the article of the first aspect in a structure between two areas that can differ in temperature.

The process of the present invention is useful to prepare the article of the present invention. The article of the present invention is useful as thermally an insulating material, particularly in applications where insulation having flexibility and low thermal conductivity is necessary, as well as for sound insulation (acoustical dampening). Particular uses for the article of the present invention include pipe and tank insulation and acoustical attenuation (acoustical insulation) in applications such as appliance panels and building insulation.

### DETAILED DESCRIPTION OF THE INVENTION

Test methods refer to the most recent test method as of the priority date of this document unless the test method number includes a different date. References to test methods contain both a reference to the testing society and the test method number. The following test method abbreviations apply herein: ASTM refers to American Society for Testing and Materials; EN refers to European Norm; DIN refers to Deutsches Institute für Normung; and ISO refers to International Organization for Standards.

"Multiple" means two or more. "And/or" means "and, or as an alternative". All ranges include endpoints unless otherwise indicated.

"Length", "width" and "thickness" are three mutually perpendicular dimensions of an article. Length is a dimension having a magnitude equivalent to the largest magnitude dimension of the length, width and thickness. Thickness has a magnitude equal to the smallest magnitude of the length, width and thickness. Width has a magnitude equal to the length, thickness, both the length and thickness, or a magnitude somewhere between that of the length and thickness.

"Functionally free" means that, if present, the concentration is below that which would have a material effect on the physical properties of the article of the present invention, unless otherwise specifically defined herein. For example, inorganic nanoporous particles that are functionally free of a coating means that there is no material effect on the physical properties of the article of the present invention containing the inorganic nanoporous particles due to the presence of the coating. Within the scope of the definition of "functionally free" is "free of" (meaning absent).

Inorganic nanoporous particles for use in the present invention include aerogel, xerogel, cryogel, zeolite, dried alcogel, and mesostructured cellular materials. Nanoporous particles are particles that define pores within the particle that are less than one micron in average cross sectional diameter. Desirably, the nanoporous particles for use in the present invention have average pore cross sectional diameters of 500 nanometers (nm) or less, preferably 250 nm or less, still more preferably 100 nm or less and yet more preferably 70 nm or less. Typically, the average pore cross sectional diameters of the nanoporous particles are 5 nm or more. Determine average pore cross sectional diameters of the nanoporous particles using calculations according to the Brunauer-Emmett-Teller (BET) technique with desorption curve data collected using the method of Barrett-Joyner-Henda (*see,* K.S.W.Sing et al., Pure & Appl. Chem., Vol. 57, No. 4, pp. 603-619 (1985)). Pore size and isotherm classification follow IUPAC standards.

The inorganic nanoporous particles of the present invention are distinct from organic-inorganic hybrid aerogel particulates such as those disclosed in United States patent application US2010/0080949 because the inorganic nanoporous particles of the present invention are free of organic components having latent covalent bonding reactivity (reactivity susceptible to covalent bond formation) and are desirably free of organic components altogether.

The inorganic nanoporous materials in the present invention are in the form of "particles" bound together by a polyurethane binder. A "particle" as used herein refers to objects of any shape. Particles of inorganic nanoporous materials for use in the present invention typically have a largest dimension that is in a range from five micrometers to five millimeters. Desirably, the largest particle dimension is 50 micrometers or larger, still more preferably 200 micrometers or large. At the same time, desirably the largest particle dimension is four millimeters or less, preferably two millimeters or less. In a particularly desirable embodiment use a broad particle size distribution, or particles having a multimodal (*for example,* bimodal or trimodal) particle size distribution to achieve a more dense packing of particles than is achievable with a narrow particle size distribution.

Inorganic nanoporous particles make up a majority of the volume of an article of the present invention. Typically, inorganic nanoporous particles account for 75 percent by volume (vol%) or more of the article. Desirably, the inorganic nanoporous particles are present in an article of the present invention at a concentration of 85 vol% or more, preferably 90 vol% or more, still more preferably 95 vol% or more and can be present at a concentration of 98 vol% or more based on total article volume. Typically, the concentration of nanoporous particles in the articles of the present invention is 99 vol% or less in order to ensure sufficient volume of binder to adhere the particles together.

Inorganic aerogel materials arc perhaps the most well known nanoporous materials that are suitable for use in the present invention. Inorganic aerogel materials include those made of metallic oxides, such as silica, alumina, titania and ceria, as prepared from sol-gel techniques. Silicon (Si) or aluminum (Al) based aerogel composites are two such more commonly used materials. A common and particularly desirable aerogel material for use as the nanoporous particles of the present invention are silicon dioxide (SiO₂) aerogels. In one embodiment, the nanoporous particles have a surface that can undergo hydrogen bonding with the water dispersible polyurethane binder used in the present invention.

The inorganic nanoporous particles are functionally free, and can be absolutely free of functional coatings. Functional coatings form a coherent layer over or encapsulate an inorganic nanoporous particle and impart at least one chemical or physical property or characteristic to that surface that is different from the chemical and physical properties and characteristics of the pre-coated particle surface. For example, US2008/0287561 describes polymeric foams containing aerogel particles in a polymer matrix, but the aerogel particles comprise a functional coating that forms a cohesive barrier layer on the outer surface of the particles thereby preventing polymer from penetrating pores of the aerogel particles. Therefore, the aerogel particles of US2008/0287561 are not functionally free of functional coatings.

Desirably, pore walls of the inorganic nanoporous particles have a sufficiently hydrophobic surface so as to preclude water absorption throughout the porous structure of the particles. If the pore walls of the particles are too hydrophilic, water from the binder composition can soak into the pore structure of the particle making drying of the final article difficult and can lead to collapse of the particle during drying due to the capillary force of water exiting the pore network. This does not necessarily require any coating or treatment on the outside surface of the particle itself, as is required in US2008/0287561 but rather a characteristic of the pore wall within the particles. Determine if an inorganic nanoporous particle has such a sufficiently hydrophobic surface by subjecting a group of particles to a water bath for 30 minutes, drying the particles in a forced air oven at 80 °C for three hours and determining the amount of water remaining in the particles. If less than 15%, preferably less than 10%, more preferably less than 5%, still more preferably less than 2% of the weight of the dried particles corresponds to water then the pore walls of the particles have a sufficiently hydrophobic surface.

Articles of the present invention have nanoporous particles bound together using a water dispersible polyurethane binder. Typically, there is an absence of any covalent bonding between the polyurethane binder and the nanoporous particles. "Water dispersible polyurethane binder" is not necessary redispersible in water, but rather the name refers to the form of the particular type of polyurethane prior to drying. Therefore, reference to water dispersible polyurethane binder in the context of the article of the present invention typically refers to a coalesced version of the binder as opposed to a dispersion, or even a redispersible form of the binder. Reference to water dispersible polyurethane in the context of the process of the present invention prior to drying can refer to a form of the polyurethane that is dispersible or even dispersed in water (as the context will indicate). The water dispersible polyurethane binder is non-foamed in the process and article of the present invention.

Water dispersible polyurethane is distinguishable from other forms of polyurethane due to the presence of functionality enabling dispersion of the polymer into water. A particularly desirable form of water-dispersible polyurethane contains a form of dimethylolpropionic acid (DMPA), which is also known as 2,2-bis(hydroxymethyl)propanoic acid (bis-MPA). DMPA can be present in an acidic form or an anionic form. The anionic form is most desirable. DMPA can be present in the polyurethane at a concentration of 0.2 wt% or more, preferably 0.5 wt% or more and can be present at a concentration of one wt% or more, four wt% or more or even five wt% or more based on total water dispersible polyurethane solids weight. At the same time, the concentration of DMPA is typically present at a concentration of 10 wt% or less based on total water dispersible polyurethane solids weight.

Determine the presence of DMPA using pyrolysis gas chromatography-mass spectrometry (pyrolysis GC-MS) by looking for fragments of isobutene, 2-methyl-2-proprene-1-ol and methacrylic acid in the mass spectrum. Exemplary guideline conditions for such an analysis use a Frontier Labs 202iD pyroloyzer to pyrolyze air dried sample at 650°C for 12 seconds followed by separation of volatile pyrolysis products using an Agilent 6890 gas chromatograph equipped with a Supelco (SLB-5ms, 28746-U) separation column, using the following parameters: set temperature to 40°C for one minute, 40°C to 320°C at 8°C per minute ramping rate, 320°C for 15 minutes; set column flow to 0.6 mL/min, pressure to 2.8 pounds per square inch. Identify separated components using a ThermoElectron DSQ quadrupole mass spectrometer by comparison with mass spectra from the National Institute of Standards and Technology database. Use the following parameters: scan rate of two scans per second, san mode is mass scan range: 14-600; electron ionization (EI Volume); Detector gain - 2Xe5; MS acquisition time = 1 minute; emission Current = 70 microamperes; and source current equals 325 microamperes. A skilled artisan can optimize these guideline parameters as needed for their equipment and conditions.

Water dispersible polyurethanes are available as aqueous polyurethane dispersions, or "PUDs". PUDs comprise water dispersible polyurethane in an aqueous carrier. There are many types of PUD systems including those with thermoplastic water dispersible polyurethane as well as thermosetting water dispersible polyurethane with cross-linkable polyurethane particles (either two-component systems or one-component systems with latent crosslinking moieties in the particles). The present invention, in its broadest scope, is not limited to a particular type of water dispersible polyurethane. However, thermoplastic water dispersible polyurethanes are most desirable for preparing articles of the present invention, particularly flexible articles of the present invention. It can be advantageous to induce some level of crosslinking, particularly when using a polyurethane having a particularly low glass transition temperature in order to enhance mechanical integrity in the final article. However, excessive crosslinking in a binder will reduce flexibility of the final article. Thermosetting polymer binders are crosslinked and so tend to produce less flexible articles than thermoplastic polymer binders, particularly at high levels of crosslinking. Crosslinking can occur before, during or after drying of the PUD by known methods including UV curing and use of chemical crosslinking agents. Aliphatic water dispersible polyurethanes are particularly desirable. The water dispersible polyurethane can be anionic to facilitate aqueous dispersibility.

Water dispersible polyurethane binder is a minor component by volume of the article of the present invention. Typically the water dispersible polyurethane binder is present at a concentration of 25 vol% or less, preferably 20 vol% or less, more preferably 15 vol% or less, still more preferably 10 vol% or less, most preferably 5 vol% or less and can be present at a concentration of two vol% or less based on total dried article volume. Desirably, the water dispersible polyurethane binder is present at a concentration of at least one vol% based on total dried article volume in order to ensure mechanical integrity of the article.

Articles of the present invention can contain any one or any combination of more than one of the following additives: fibers, colorant, flame retardant (*for example,* halogenated organic compounds, phosphorous compounds, and/or inorganic compounds), infrared attenuating agents (*for example,* carbon black and graphite, titanium dioxide), boron carbide, diatomite, manganese ferrite, manganese oxide, nickel oxide, tin oxide, silver oxide, bismuth oxide, titanium carbide, tungsten carbide, iron titanium oxide, zirconium silicate, zirconium oxide, iron(I) oxide, iron (III) oxide, manganese dioxide, manganese dioxide, iron titanium oxide (ilmenite), chromium oxide, silicon carbide, insecticides, fungicides, biocides, mildeweides and algaecides. Articles of the present invention can also be free from any one or any combination of more than one of the stated additives. For example, the articles of the present invention can be free of fibers or, in particular, polyethylene terephthalate fibers. Additives are generally present at a concentration of five vol% or less, two vol% or less, one vol% or less or zero vol% (absent) based on total article volume.

The articles are preferably functionally free and can be completely free of hollow non-porous fillers, sheet silicates and clay minerals. By being "functionally free" of hollow non-porous fillers the density of articles of the present invention are affected by less than 0.01 grams per cubic centimeter (g/cm³), preferably less than 0.005 g/cm³, more preferably less than 0.001 g/cm³ due to the presence of hollow non-porous fillers as compared to the article density in an absence of the hollow non-porous fillers. Being functionally free of sheet silicates and clay minerals means that the articles comprise less than 0.5 percent by weight (wt%), preferably less than 0.1 wt% and can be completely free of sheet silicates and clay minerals relative to inorganic nanoporous particle weight. Sheet silicates and clay minerals assume their meaning from United States patent 5,656,195 (incorporated herein by reference) and include montmorillonite, kaolinites and/or attapulgites.

Articles of the present invention have a density of 0.14 g/cm³ or less, preferably 0.12 g/cm³ or less and yet more preferably 0.10 g/cm³ or less. Generally, the article will have a density of 0.01 g/cm³ or higher to ensure desirable mechanical durability. Determine article density according to ASTM D1622.

Thermal conductivity is an important characteristic of the articles of the present invention. The articles beneficially enjoy low conductivity properties due to the high volume of inorganic nanoporous particles. Articles of the present invention have a thermal conductivity of 25 milliWatts per meter*Kelvin (mW/m*K) or less, preferably 24 mW/m*K or less, still more preferably 23 mW/m*K or less and can be 22 mW/m*K or less or even 21 mW/m*K or less. Determine article thermal conductivity according to ASTM C518.

Particularly desirable embodiments of the present invention are flexible. "Flexible" articles of the present invention can be reversibly bent, compressed, or indented without fracturing. Flexibility is unusual for inorganic nanoporous articles. One of the drawbacks to inorganic nanoporous materials such as aerogels is that they tend to be rigid and friable. Those characteristics make them undesirable for use in construction applications where flexible insulation such as fiber batt has historically been desirable. However, use of a water dispersible polyurethane binder enables embodiments of the present invention to bend, compress and indent without macroscopic damage. In fact, desirable embodiments of articles of the present invention can bend such that a plane of the article perpendicular to the thickness dimension of the article bends at least 90 degrees around a mandrel having a diameter equal to the thickness of the article without any macroscopic crumbling or fracturing of the article. This extent of flexibility far exceeds the 130 degree angle (corresponding to a 50 degree bend) of Capadona et al. (Polymer 47 (2006) 5754-5761), the article disclosing flexible crosslinked silica aerogel monoliths using amine functionalized aerogel crosslinked with di-isocyanate molecules. Flexibility makes articles of the present invention particularly desirable for conforming to pipes and tanks in pipe and tank insulation applications and for conforming to cavities in cavity insulation applications.

Articles of the present invention are capable of efficient production in dimensions suitable for use in building and construction without the handicaps associated with trying to prepare an aerogel article in those same dimensions. Unlike manufacturing aerogel articles, manufacturing articles of the present invention does not include removal of large volumes of solvent from inorganic nanoporous structures. Articles of the present invention can have thicknesses of 0.5 centimeters (cm) or more, preferably 0.75 cm or more, still more preferably one cm or more, still more preferably 1.25 cm or more, and can have thickness of even 2.5 cm or more. At the same time, the articles having these thicknesses can have length and width dimensions that are 15 cm or more.

It is within the scope of the present invention to combine a facer such as metal sheet, film or foil, paper facer, a non-woven sheet facer, a fibrous facer sheet or some other facer to at least one surface of an article of the present invention. Hence, the article of the present invention can include one or more facer on one or more surface. In one particular embodiment, the article of the present invention includes a facer on opposing surfaces forming a sandwiched structure. The article of the present invention can also, or alternatively, include one or more panel or plank of sheathing on one or more surface. Examples of suitable sheathing includes polymeric foam boards, oriented strand board, plaster board and gypsum board.

Prepare articles of the present invention by dispersing inorganic nanoporous particles into an aqueous dispersion of water dispersible polyurethane to form a filled dispersion; casting the filled dispersion into a mold; and drying to form an article of the present invention. The inorganic nanoporous particles and water dispersible polyurethane are as described for the article of the present invention. The filled dispersion can be foamed or non-foamed upon casting into a mold and can be free of polyethylene terephthalate fibers.

One desirable method of using the articles of the present invention is as thermally insulating materials. In an embodiment of this method, place the article in a structure between two areas that can differ in temperature. The article serves to inhibit heat flow from one of the areas to the other and thereby provides thermal insulation. Examples of areas that can differ in temperature include inside and outside of a refrigerator, inside and outside of a building structure (homes, office building, stores and the like), inside and outside of pipes, as well as inside and outside of spacecraft or other transportation vehicles.

Articles of the present invention have utility as, for example, insulating refrigerator panels, flexible pipe insulation, insulating sheathing materials for building and construction applications, and structural panel insulation. The articles of the present invention offer insulation capability as thermal insulation, acoustical insulation, or both thermal and acoustical insulation.

### Example

Combine in a beaker 60 milliliters of PRIMAL™ BINDER U91 aliphatic polyurethane dispersion that is 38.0-42.0 percent solids (PRIMAL is a trademark of the Rohm and Hass Company and that contains approximately 4 wt% DMPA based on solids weight and 39.6 grams of Nanogel™ SiO₂ aerogel particles (Nanogel is a trademark of Cabot Corporation) by slowly adding the aerogel particles to the polyurethane dispersion. The aerogel particles have an average size of 0.7 to 1.2 millimeters and average pore sizes of 20-40 nanometers and are functionally free of organic components having latent covalent bonding reactivity and functional coatings. Stir the mixture for approximately 20 minutes and then pour the mixture into a polytetrafluoroethylene-covered frame that is 15 cm wide, 15 cm long and 2.5 cm deep. Place the frame and mixture in an oven at 80°C for approximately three hours to dry.

The resulting article is an example of the present invention that is 15 cm by 15 cm by 2.5 cm in dimensions. The article is capable of bending its 15 cm by 15 cm plane 90°C around a 2.5 cm diameter mandrel without macroscopic fracturing or crumbling. The article has a density of 0.087 g/cm³ and a thermal conductivity of 20.8 mW/m*K. The aerogel particles account for approximately 95.8 vol% of the final dried article while the binder accounts for 4.2 vol% of the final dried article. The article is free of hollow non-porous particles and sheet silicates. The binder is non-foamed.

The Nanogel™ SiO₂ aerogel particles have a maximum of 1.4% water by weight of the dried particles after subjecting a group of particles to a water bath for 30 minutes, drying the particles in a forced air oven at 80°C for three hours and determining the amount of water remaining in the particles.

## Claims

1. An article comprising inorganic nanoporous particles bound together by a non-foamed water dispersible polyurethane, the article comprising 75 volume percent or more inorganic nanoporous particles based on total article volume and having a density, determined according to ASTM D1622, of 0.14 grams per cubic centimeter or less and a thermal conductivity, determined according to ASTM C518, of 25 milliWatts per meter*Kelvin or less and having a thickness of at least 0.5 centimeters, wherein said inorganic nanoporous particles are particles that define pores within the particle that have an average cross sectional diameter, calculated according to the Brunauer-Emmett-Teller (BET) technique with desorption curve data collected using the method Barrett-Joyner-Henda, of less than one micron, and wherein said inorganic nanoporous particles are functionally free of organic components having latent covalent bonding reactivity and functional coatings over the outside of the particles and the article is functionally free of hollow non-porous particles, sheet silicates and clay minerals.

2. The article of Claim 1, further **characterized by** having a thickness and sufficient flexibility to bend a plane perpendicular to the thickness at least 90 degrees around a mandrel having a diameter equal to the thickness of the article without macroscopic fracturing or crumbling.

3. The article of Claim 1, further **characterized by** the water dispersible polyurethane being thermoplastic aliphatic polyurethane.

4. The article of Claim 1, wherein the water dispersible polyurethane is crosslinked.

5. The article of Claim 1, wherein the inorganic nanoporous particles include aerogel particles that contain silicon dioxide.

6. The article of Claim 1, wherein the inorganic nanoporous particles have pore walls that are sufficiently hydrophobic so as to preclude water absorption throughout the porous structure of the particles.

7. The article of Claim 1, further characterized as being in the form of a plank that is at least two centimeters thick, fifteen centimeters wide and fifteen centimeters long.

8. The article of claim 1, further comprising a facer on at least one surface of the article.

9. A process for preparing the article of Claim 1, the process comprising the following steps: (a) dispersing inorganic nanoporous particles into an aqueous dispersion of a non-foamed water dispersible polyurethane to form a filled dispersion; (b) casting the filled dispersion into a mold; and (c) drying to form an article of Claim 1, wherein said inorganic nanoporous particles are particles that define pores within the particle that have an average cross sectional diameter, calculated according to the Brunauer-Emmett-Teller (BET) technique with desorption curve data collected using the method Barrett-Joyner-Henda, of less than one micron, and wherein said inorganic nanoporous particles are functionally free of organic components having latent covalent bonding reactivity, and functional coatings over the outside of the particles.

10. The process of Claim 9, wherein the inorganic nanoporous particles are present in the filled dispersion at a concentration sufficient to result in 90 volume percent or more of the article volume of the final article volume.

11. The process of Claim 9, wherein the filled dispersion in step (b) is non-foamed.

12. The process of Claim 9, wherein the water dispersible polyurethane after step (c) is crosslinked and the crosslinking is induced at any point or points prior to, during or after step (c).

13. The process of Claim 9, wherein the inorganic nanoporous particles have pore walls that are sufficiently hydrophobic so as to preclude water absorption throughout the porous structure of the particles.

14. A method for using the article of Claim 1, the method of use comprising placing the article in a structure between two areas that can differ in temperature.

## Patentansprüche

1. Ein Artikel, beinhaltend anorganische nanoporöse Partikel, die durch ein nichtgeschäumtes wasserdispergierbares Polyurethan miteinander verbunden sind, wobei der Artikel 75 Volumenprozent oder mehr anorganische nanoporöse Partikel, bezogen auf das Artikel-Gesamtvolumen, beinhaltet und eine Dichte, bestimmt nach ASTM D1622, von 0,14 Gramm pro Kubikzentimeter oder weniger und eine Wärmeleitfähigkeit, bestimmt nach ASTM C518, von 25 Milliwatt pro Meter*Kelvin oder weniger aufweist, und eine Dicke von mindestens 0,5 Zentimeter aufweist, wobei die anorganischen nanoporösen Partikel Partikel sind, die Poren in dem Partikel definieren, die einen durchschnittlichen Querschnittsdurchmesser aufweisen, berechnet nach der Brunauer-Emmett-Teller-Methode (BET-Methode) mit Desorptionskurvendaten, die unter Verwendung des Barrett-Joyner-Henda-Verfahrens gesammelt wurden, der weniger als einen Mikrometer beträgt, und wobei die anorganischen nanoporösen Partikel funktionell frei sind von organischen Komponenten mit latent kovalenter Bindungsreaktivität und funktionellen Beschichtungen über der Außenseite der Partikel und der Artikel funktionell frei ist von hohlen nichtporösen Partikeln, Phyllosilikaten und Tonmineralien.

2. Artikel gemäß Anspruch 1, ferner **dadurch gekennzeichnet, dass** er eine Dicke und ausreichende Flexibilität aufweist, um eine Ebene senkrecht zu der Dicke um einen Dorn mit einem Durchmesser gleich der Dicke des Artikels ohne makroskopisches Brechen oder Zerbröckeln um mindestens 90 Grad zu biegen.

3. Artikel gemäß Anspruch 1, ferner **dadurch gekennzeichnet, dass** das wasserdispergierbare Polyurethan thermoplastisches aliphatisches Polyurethan ist.

4. Artikel gemäß Anspruch 1, wobei das wasserdispergierbare Polyurethan vernetzt ist.

5. Artikel gemäß Anspruch 1, wobei die anorganischen nanoporösen Partikel Aerogel-Partikel umfassen, die Siliziumdioxid enthalten.

6. Artikel gemäß Anspruch 1, wobei die anorganischen nanoporösen Partikel Porenwände aufweisen, die ausreichend hydrophob sind, um die Wasserabsorption in der gesamten porösen Struktur der Partikel zu verhindern.

7. Artikel gemäß Anspruch 1, ferner **dadurch gekennzeichnet, dass** er in der Form eines Bretts vorliegt, das mindestens zwei Zentimeter dick, fünfzehn Zentimeter breit und fünfzehn Zentimeter lang ist.

8. Artikel gemäß Anspruch 1, der ferner auf mindestens einer Oberfläche des Artikels eine Verkleidung beinhaltet.

9. Ein Verfahren zur Herstellung des Artikels gemäß Anspruch 1, wobei das Verfahren die folgenden Schritte beinhaltet: (a) Dispergieren anorganischer nanoporöser Partikel in einer wässrigen Dispersion eines nichtgeschäumten wasserdispergierbaren Polyurethans, um eine gefüllte Dispersion zu bilden; (B) Gießen der gefüllten Dispersion in eine Form; und (c) Trocknen, um einen Artikel gemäß Anspruch 1 zu bilden, wobei die anorganischen nanoporösen Partikel Partikel sind, die Poren in dem Partikel definieren, die einen durchschnittlichen Querschnittsdurchmesser aufweisen, berechnet nach der Brunauer-Emmett-Teller-Methode (BET-Methode) mit Desorptionskurvendaten, die unter Verwendung des Barrett-Joyner-Henda-Verfahrens gesammelt wurden, der weniger als einen Mikrometer beträgt, und wobei die anorganischen nanoporösen Partikel funktionell frei sind von organischen Komponenten mit latent kovalenter Bindungsreaktivität und funktionellen Beschichtungen über der Außenseite der Partikel.

10. Verfahren gemäß Anspruch 9, wobei die anorganischen nanoporösen Partikel in der gefüllten Dispersion in einer ausreichenden Konzentration vorliegen, um 90 Volumenprozent oder mehr des Artikelvolumens des endgültigen Artikelvolumens zu ergeben.

11. Verfahren gemäß Anspruch 9, wobei die gefüllte Dispersion in Schritt (b) nichtgeschäumt ist.

12. Verfahren gemäß Anspruch 9, wobei das wasserdispergierbare Polyurethan nach Schritt (c) vernetzt wird und die Vernetzung an einem beliebigen Punkt/beliebigen Punkten vor, während oder nach Schritt (c) induziert wird.

13. Verfahren gemäß Anspruch 9, wobei die anorganischen nanoporösen Partikel Porenwände aufweisen, die ausreichend hydrophob sind, um die Wasserabsorption in der gesamten porösen Struktur der Partikel zu verhindern.

14. Eine Methode zur Verwendung des Artikels gemäß Anspruch 1, wobei die Methode der Verwendung das Platzieren des Artikels in einer Struktur zwischen zwei Bereichen, die sich von der Temperatur her unterscheiden können, beinhaltet.

## Revendications

1. Un article comprenant des particules nanoporeuses inorganiques liées ensemble par un polyuréthane hydrodispersable non expansé, l'article comprenant 75 pour cent en volume ou plus de particules nanoporeuses inorganiques rapporté au volume de l'article total et ayant une masse volumique, déterminée conformément à l'ASTM D1622, de 0,14 gramme par centimètre cube ou moins et une conductivité thermique, déterminée conformément à l'ASTM C518, de 25 milliWatts par mètre*Kelvin ou moins et ayant une épaisseur d'au moins 0,5 centimètre, dans lequel lesdites particules nanoporeuses inorganiques sont des particules qui définissent des pores au sein de la particule qui ont un diamètre en coupe transversale moyen, calculé conformément à la technique Brunauer-Emmett-Teller (BET) avec des données de courbe de désorption recueillies en utilisant la méthode Barrett-Joyner-Henda, qui fait moins de un micron, et dans lequel lesdites particules nanoporeuses inorganiques sont fonctionnellement exemptes de constituants organiques ayant une réactivité de liaison covalente latente et de revêtements fonctionnels sur l'extérieur des particules et l'article est fonctionnellement exempt de particules non poreuses creuses, de phyllosilicates et de minéraux argileux.

2. L'article de la revendication 1, caractérisé en sus par le fait d'avoir une épaisseur et une flexibilité suffisante pour plier un plan perpendiculaire à l'épaisseur d'au moins 90 degrés autour d'un mandrin ayant un diamètre égal à l'épaisseur de l'article sans fracturation ni effritement macroscopique.

3. L'article de la revendication 1, caractérisé en sus par le fait que le polyuréthane hydrodispersable est un polyuréthane aliphatique thermoplastique.

4. L'article de la revendication 1, dans lequel le polyuréthane hydrodispersable est réticulé.

5. L'article de la revendication 1, dans lequel les particules nanoporeuses inorganiques incluent des particules d'aérogel qui contiennent du dioxyde de silicium.

6. L'article de la revendication 1, dans lequel les particules nanoporeuses inorganiques ont des parois de pores qui sont suffisamment hydrophobes pour faire obstacle à l'absorption d'eau dans toute la structure poreuse des particules.

7. L'article de la revendication 1, caractérisé en sus comme se présentant sous la forme d'une planche qui fait au moins deux centimètres d'épaisseur, quinze centimètres de large et quinze centimètres de long.

8. L'article de la revendication 1, comprenant en sus un parement sur au moins une surface de l'article.

9. Un procédé pour préparer l'article de la revendication 1, le procédé comprenant les étapes suivantes : (a) disperser des particules nanoporeuses inorganiques dans une dispersion aqueuse d'un polyuréthane hydrodispersable non expansé afin de former une dispersion chargée ; (b) couler la dispersion chargée dans un moule ; et (c) faire sécher afin de former un article de la revendication 1, dans lequel lesdites particules nanoporeuses inorganiques sont des particules qui définissent des pores au sein de la particule qui ont un diamètre en coupe transversale moyen, calculé conformément à la technique Brunauer-Emmett-Teller (BET) avec des données de courbe de désorption recueillies en utilisant la méthode Barrett-Joyner-Henda, qui fait moins de un micron, et dans lequel lesdites particules nanoporeuses inorganiques sont fonctionnellement exemptes de constituants organiques ayant une réactivité de liaison covalente latente et de revêtements fonctionnels sur l'extérieur des particules.

10. Le procédé de la revendication 9, dans lequel les particules nanoporeuses inorganiques sont présentes dans la dispersion chargée à une concentration suffisante pour résulter en 90 pour cent en volume ou plus du volume d'article du volume de l'article final.

11. Le procédé de la revendication 9, dans lequel la dispersion chargée de l'étape (b) est non expansée.

12. Le procédé de la revendication 9, dans lequel le polyuréthane hydrodispersable après l'étape (c) est réticulé et la réticulation est induite à n'importe quel(s) moment ou moments préalablement à, pendant ou après l'étape (c).

13. Le procédé de la revendication 9, dans lequel les particules nanoporeuses inorganiques ont des parois de pores qui sont suffisamment hydrophobes pour faire obstacle à l'absorption d'eau dans toute la structure poreuse des particules.

14. Une méthode pour utiliser l'article de la revendication 1, la méthode d'utilisation comprenant le fait de placer l'article dans une structure entre deux zones qui peuvent différer en température.
